# EUROPÄISCHE PATENTANMELDUNG

(11) **EP 2 653 208 A1**
(43) Veröffentlichungstag der Anmeldung: **23.10.2013**
(21) Anmeldenummer: 12164433.0
(22) Anmeldetag: 17.04.2012
(51) Int. Cl.: B01D 53/14, B01D 53/62

(54) **Aminwaschlösung zur Absorption von Kohlendioxid mit Oxidationsinhibitoren**

(71) Anmelder: Siemens Aktiengesellschaft, 80333 München (DE)
(72) Erfinder: Fischer, Björn, 60318 Frankfurt a.M. (DE); Joh, Ralph, Dr., 63500 Seligenstadt (DE); Kuettel, Diego Andres, 65934 Frankfurt am Main (DE); Schneider, Rüdiger, Dr., 65817 Eppstein (DE)

(57) **Zusammenfassung**

Es wird ein Verfahren zur Abscheidung von Kohlendioxid aus einem Rauchgas (RG) einer Verbrennungsanlage angegeben, wobei einer Waschlösung (A) mit einem aminhaltigen Absorptionsmittel (z.B. 20) als Oxidationsinhibitor Bicin (31) und/oder EDTA (30) zugemischt wird, das Rauchgas (RG) mit der derart aufbereiteten Waschlösung (A) unter Absorption von enthaltenem Kohlendioxid in Kontakt gebracht wird, und wobei anschließend die Waschlösung (A) unter Desorption des Kohlendioxids thermisch behandelt wird. Weiter wird eine entsprechende Waschlösung (A) mit einem aminhaltigen Absorptionsmittel (z.B. 20) sowie mit Bicin (31) und/oder EDTA (30) als Oxidationsinhibitor angegeben.

## Beschreibung

Die Erfindung betrifft eine Waschlösung zur Absorption von Kohlendioxid aus einem Rauchgas einer Verbrennungsanlage. Die Erfindung betrifft weiter ein Verfahren zur Abscheidung von Kohlendioxid aus einem Rauchgas einer Verbrennungsanlage mittels einer derartigen Waschlösung.

Bei der Verbrennung eines fossilen Brennstoffs in einer Verbrennungsanlage, wie zum Beispiel in einem fossil befeuerten Kraftwerk zur Erzeugung elektrischer Energie, ist das entstehende Rauchgas in nicht unerheblichem Umfang mit Kohlendioxid befrachtet. Neben Kohlendioxid enthält ein derartiges Rauchgas weitere Verbrennungsprodukte wie zum Beispiel die Gase Stickstoff, Schwefeloxide, Stickstoffoxide und Wasserdampf sowie Festkörperpartikel, Stäube und Ruß. Gewöhnlich wird das Rauchgas nach einer weitgehenden Abscheidung der Festkörperbestandteile in die Atmosphäre entlassen. Gegebenenfalls werden auch Stickoxide und/oder Schwefeloxide katalytisch oder nasschemisch abgetrennt. Als natürlicher Bestandteil der Erdatmosphäre wird jedoch Kohlendioxid üblicherweise mit in die Atmosphäre entlassen.

Die durch den Menschen verursachte Erhöhung des Anteils an Kohlendioxid in der Erdatmosphäre wird jedoch als Hauptursache für den als Klimawandel bezeichneten Anstieg der Erdoberflächentemperaturen verantwortlich gemacht. In der Atmosphäre befindliches Kohlendioxid behindert nämlich die Wärmeabstrahlung von der Erdoberfläche ins All, was allgemein als Treibhauseffekt bekannt ist.

Insofern werden bei bestehenden Kraftwerksanlagen geeignete Sekundärmaßnahmen diskutiert, um nach der Verbrennung das entstandene Kohlendioxid aus dem Rauchgas zu entfernen. Als eine technische Möglichkeit wird hierzu das Rauchgas mit einer Waschlösung in Kontakt gebracht, die mit einem geeigneten Absorptionsmittel für Kohlendioxid versetzt ist. Am aussichtsreichsten erscheinen derzeit aminhaltige Absorptionsmittel, wobei als Amine insbesondere Alkanolamine, aber auch komplexere sterisch gehinderte Amine mit großen Alkylgruppen, zyklische Amine, Aminosäuren oder Aminosäuresalze eingesetzt werden. Die eingesetzten Amine bilden mit Kohlendioxid entweder Carbamate, oder das Kohlendioxid reagiert in der Waschlösung indirekt zu Hydrogencarbonat und einem protonierten Amin.

Durch den Kontakt des Rauchgases mit der Waschlösung wird enthaltenes gasförmiges Kohlendioxid in der Waschlösung gelöst bzw. in chemischem Sinne absorbiert. Das von Kohlendioxid befreite Rauchgas wird in die Atmosphäre entlassen. Die mit Kohlendioxid befrachtete Waschlösung kann an eine andere Stelle verbracht werden, wo es durch eine thermische Behandlung unter Desorption des Kohlendioxids wieder regeneriert wird. Das abgeschiedene Kohlendioxid kann nun z.B. in mehreren Stufen verdichtet, gekühlt und verflüssigt werden. In flüssigem oder gefrorenem Zustand kann das Kohlendioxid dann einer Lagerung oder Verwertung zugeführt werden. Die regenerierte Waschlösung wird erneut zur Absorption von Kohlendioxid aus dem Rauchgas eingesetzt.

Bei einer aminhaltigen Waschlösung kann es durch den relativ hohen Sauerstoffgehalt in einem Rauchgas zu einer unerwünschten oxidativen Degradation kommen. Dabei können sich Abbauprodukte bilden, die nur zum Teil im Desorptionsprozess wieder zurückgebildet werden können. Derartige Abbauprodukte führen zu einer Absenkung der Kapazität der Waschlösung zur Aufnahme von Kohlendioxid. Darüber hinaus begünstigen die Abbauprodukte gegebenenfalls die Korrosion und verändern die Fließeigenschaften der Waschlösung. Auch kann sich der pH-Wert der Waschlösung ändern, welcher einen wesentlichen Einfluss auf die Absorptionskapazität der aminhaltigen Waschlösung hat.

Trotz der an sich sehr guten Stabilität gegenüber Sauerstoff neigen auch Aminosäuresalze zu einer gewissen Sauerstoffdegradation. Hierbei können, abhängig vom jeweils eingesetzten Aminosäuresalz, unter anderem auch leicht flüchtige Abbauprodukte wie zum Beispiel Ammoniak, Methylamin oder Formaldehyd, entstehen. Solche flüchtigen Komponenten führen zu einer zusätzlichen unerwünschten Umweltbelastung. In der Atmosphäre können weitere Produkte entstehen.

Neben den aufgezählten unerwünschten Folgen von insbesondere oxidativen Abbauprodukten der eingesetzten Amine führt eine Degradation auch immer zu einem Verlust an eingesetztem Absorptionsmittel. Das Absorptionsmittel muss daher dem Prozess kontinuierlich zugegeben werden, wodurch sich nachteiligerweise die Betriebskosten für den Abscheideprozess erhöhen.

Aufgabe der Erfindung ist es daher, eine Waschlösung der eingangs genannten Art sowie ein Verfahren zur Abscheidung von Kohlendioxid aus dem Rauchgas einer Verbrennungsanlage anzugeben, wodurch gegenüber dem Stand der Technik eine Verbesserung der Wirtschaftlichkeit möglich ist.

Hinsichtlich der Waschlösung zur Absorption von Kohlendioxid aus einem Rauchgas einer Verbrennungsanlage wird die Aufgabe erfindungsgemäß dadurch gelöst, dass der Waschlösung neben einem aminhaltigen Absorptionsmittel als ein Oxidationsinhibitor Ethylendiamintetraacetat (kurz: EDTA) und/oder N,N-bis(2-Hydroxyethyl)-glycin (kurz: Bicin) zugesetzt ist. Die eingesetzte Waschlösung umfasst somit neben einem aminhaltigen Absorptionsmittel zusätzlich EDTA und/oder Bicin.

Die Erfindung geht dabei von der Überlegung aus, dass durch das Rauchgas in die Waschlösung eingebrachte Metallionen Ursache für die oxidative Degradation der Amine und insbesondere der Aminosäuresalze sind. Insbesondere zeigen Nickel- und Kupfer-Ionen eine vergleichsweise hohe katalytische Aktivität für die oxidative Degradation von Aminosäuresalzen. Bereits sehr kleine Mengen im Bereich von einigen mMol (1/1000 Mol) von Cu²⁺ und Ni²⁺-Ionen haben bereits eine hohe Auswirkung auf den oxidativen Degradationsprozess. Eisenionen, insbesondere Fe²⁺/Fe³⁺-Ionen, wiederum katalysieren unerwünscht die oxidative Degradation von Alkanolaminen sehr gut. Die katalytische Aktivität hinsichtlich der Degradation von Aminosäuresalzen ist vorhanden, jedoch eher gering.

Wird EDTA zusätzlich in die Waschlösung eingebracht, so ist es als Komplexbildner in der Lage, die vorliegend als Ursache für die oxidative Degradation geltenden Metallionen zu binden und dadurch den Abbau der eingesetzten Amine zu behindern bzw. verlangsamen. Aber auch Bicin hat sich durch Komplexbildung mit Kupfer- und Nickel-Ionen als ein effektiver Inhibitor für die oxidative Degradation der Amine erwiesen.

Die Erfindung sieht insofern vor, einer Waschlösung mit einem aminhaltigen Absorptionsmittel gezielt EDTA und/oder Bicin zuzumischen. Durch den Zusatz an EDTA und/oder Bicin kann die oxidative Degradation der eingesetzten Amine bzw. des eingesetzten aminhaltigen Absorptionsmittels wirksam inhibiert werden. Ursache hierfür ist das durch Komplexbildung verursachte "Einfangen" der für die Oxidation katalytisch wirkenden Metallionen, die über das Rauchgas in die Waschlösung eingebracht werden.

In einer vorteilhaften Ausgestaltung der Waschlösung ist als Oxidationsinhibitor eine Mischung aus EDTA und Bicin umfasst. Es hat sich nämlich gezeigt, dass eine Mischung aus EDTA und Bicin eine höhere Inhibierung der oxidativen Degradation zeigt als jeweils die einzelnen Substanzen alleine.

In einer vorteilhaften Variante entspricht der Anteil an Bicin und EDTA in Summe wenigstens dem Anteil der katalysierenden Metallionen in der Waschlösung. Bevorzugt beträgt der Anteil an Bicin und EDTA in Summe wenigstens 1 mMol (1/1000 Mol) und bis zu 100 mMol. Innerhalb der angegebenen Konzentrationsbereiche findet eine wirtschaftlich relevante Inhibierung der oxidativen Degradation statt. Die Absorptionskapazität der Waschlösung wird durch die Hinzufügung an EDTA und/oder Bicin nicht nennenswert beeinträchtigt.

Bevorzugt liegt die Waschlösung als eine wässrige Lösung vor. Der Einsatz von Wasser hat sich wegen der Lage seines Siedepunktes sowie aus ökologischen Gesichtspunkten und nicht zuletzt aus Kostengründen durchgesetzt.

Das aminhaltige Waschmittel kann grundsätzlich ein einzelnes Amin oder eine Mischung aus Aminen enthalten. Als Amine können primäre Amine, wie Monoethanolamin oder Diglykolamin, sekundäre Amine, wie Diethanolamin oder Diisopropanolamin, und tertiäre Amine wie Methyldiethanolamine eingesetzt sein. Ebenso können komplexe Amine wie zur Carbamatbildung sterisch gehinderte oder zyklische Amine eingesetzt werden. Bei einem sterisch gehinderten Amin ist die Carbamatbildung beispielsweise durch eine große Alkylgruppe an der Aminogruppe behindert, wie dies beispielsweise bei einem 2-Amino-2-methyl-1-propanol der Fall ist. Ein zyklisches Amin ist beispielweise ein Piperazin und seine Derivate. Wiederum kann ein einzelnes Aminosäuresalz wie beispielsweise ein Kaliumsalz des Glycins oder andere Aminosäuren eingesetzt sein. Auch können Mischungen verschiedener Aminosäuresalze als Absorptionsmittel eingesetzt werden.

Hinsichtlich eines Aminosäuresalzes hat es sich als vorteilhaft herausgestellt, wenn ein Aminosäuresalz eingesetzt wird, welches einen Kohlenstoff-Substituenten aus der Gruppe aufweist, die Wasserstoff, ein Alkyl, ein Hydroxyalkyl und ein Aminoalkyl enthält. Weiter bevorzugt wird ein Aminosäuresalz eingesetzt, dass einen Stickstoff-Substituenten aus der Gruppe aufweist, die Wasserstoff, ein Alkyl, ein Hydroxyalkyl und ein Halogenalkyl enthält.

In einer weiter bevorzugten Ausgestaltung ist das Aminosäuresalz ein Salz eines Metalls, insbesondere eines Alkalimetalls.

Die Aufgabe hinsichtlich eines Verfahrens zur Abscheidung von Kohlendioxid aus einem Rauchgas einer Verbrennungsanlage wird erfindungsgemäß dadurch gelöst, dass einer Waschlösung mit einem aminhaltigen Absorptionsmittel als Oxidationsinhibitor Bicin und/oder EDTA zugemischt wird, das Rauchgas anschließend mit der derart aufbereiteten Waschlösung unter Absorption von enthaltenem Kohlendioxid in Kontakt gebracht wird, und dass anschließend die Waschlösung unter Desorption des Kohlendioxids thermisch behandelt wird.

Vorteilhafterweise wird für das Verfahren die vorbeschriebene Waschlösung eingesetzt bzw. wird eine solche Waschlösung aufbereitet. Die zu den Unteransprüchen der Waschlösung genannten Vorteile können hierbei sinngemäß auf das Verfahren zur Abscheidung von Kohlendioxid übertragen werden.

Ausführungsbeispiele der Erfindung werden anhand einer Zeichnung näher erläutert. Dabei zeigen:
FIG 1 in einer schematischen Darstellung eine Abscheidevorrichtung für Kohlendioxid aus dem Rauchgas einer Verbrennungsanlage,
FIG 2 eine allgemein gültige Strukturformel für ein Aminosäuresalz,
FIG 3 ein Diagramm mit mehreren Messkurven zum zeitlichen Verlauf eines Sauerstoffpartialdrucks über einer Waschlösung,
FIG 4 eine Strukturformel des EDTA und
FIG 5 eine Strukturformel des Bicin.

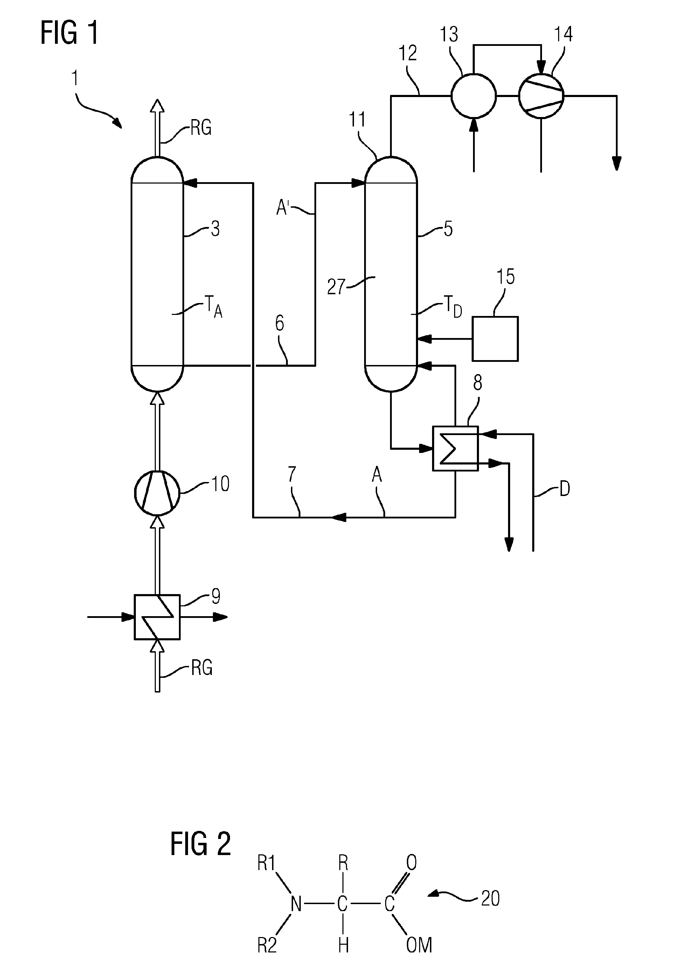

In FIG 1 ist in einer schematischen Darstellung eine Abscheidevorrichtung 1 zur Abscheidung von Kohlendioxid aus einem Rauchgas einer Verbrennungsanlage dargestellt. Die Abscheidevorrichtung 1 umfasst eine Absorptionseinrichtung 3 sowie eine Desorptionseinrichtung 5, zwischen denen in Leitungen 6,7 eine beladene Waschlösung A' bzw. eine regenerierte Waschlösung A zirkuliert. Über die Leitung 6 wird eine mit Kohlendioxid beladene Waschlösung A' aus der Absorptionseinrichtung 3 zur Regenerierung in die Desorptionseinrichtung 5 geführt. Über die Leitung 7 wird regenerierte Waschlösung A aus der Desorptionseinrichtung 5 erneut in die Absorptionseinrichtung 3 gebracht.

Der Desorptionseinrichtung 5 ist ein Reboiler 8 zugeordnet, durch den im Betriebsfall ein Prozessdampf D einer Verbrennungsanlage zur Zuführung von Wärme geführt wird. Diese Wärme wird über eine Rezirkulation der Waschlösung A in die Desorptionseinrichtung 5 eingebracht, so dass darin befindliche Waschlösung A auf eine Desorptionstemperatur T_{D} erhitzt wird, so dass gelöstes Kohlendioxid thermisch desorbiert.

Zur Abscheidung von Kohlendioxid wird im Betriebsfall das Rauchgas RG der Verbrennungsanlage zunächst in einem Rauchgaskühler 9 abgekühlt und anschließend über eine Fördereinrichtung 10 der Absorptionseinrichtung 3 zugestellt. Dort wird das kühle Rauchgas RG in Gegenstrom mit regenerierter Waschlösung A in Kontakt gebracht, so dass enthaltenes Kohlendioxid absorbiert bzw. gelöst wird. Bei einer Absorptionstemperatur T_{A} weist die aminhaltige Waschlösung A eine hohe Beladungskapazität für Kohlendioxid auf. Das von Kohlendioxid befreite Rauchgas RG wird in die Atmosphäre entlassen.

Die mit Kohlendioxid beladene Waschlösung A' strömt zur Regenerierung in die Desorptionseinrichtung 5. Im Kopfbereich der Desorptionseinrichtung 5 wird über eine Gasleitung 12 kohlendioxidreiches Gas abgeleitet und über einen Wärmetauscher 13 sowie einen sich anschließenden Verdichter 14 geführt. Mitgeführtes gasförmiges Kohlendioxid wird in dem Verdichter 14 verdichtet und für weitere Zwecke verwendet, zum Beispiel in eine Aquifere injiziert oder in einen anderweitigen Kohlendioxid-Speicher verfrachtet.

Die dargestellte Abscheidevorrichtung 1 ist insbesondere dafür geeignet, in einem Dampfkraftwerk, in einer Gasturbinenanlage oder in einer kombinierten Gas- und Dampfturbinenanlage, insbesondere mit integrierter Kohlevergasung, zur Abscheidung von Kohlendioxid aus dem Rauchgas eingesetzt zu werden. Insbesondere bietet sich die Abscheidevorrichtung 1 zu einer Modernisierung oder Nachrüstung einer derartigen Kraftwerksanlage an.

Die eingesetzte Waschlösung A enthält ein Amin oder eine Mischung aus mehreren Aminen. Bevorzugt enthält die Waschlösung ein Aminosäuresalz oder mehrere Aminosäuresalze. Zusätzlich ist der Waschlösung als Oxidationsinhibitor Bicin oder EDTA, insbesondere eine Mischung aus EDTA und Bicin, zugesetzt. Auf diese Weise wird eine oxidative Degradation von Aminen, insbesondere der eingesetzten Aminosäuresalze, wirkungsvoll behindert bzw. vermieden. Der Bedarf an Absorptionsmittel ist hierdurch verringert, so dass die Betriebskosten für die Abscheidevorrichtung 1 insgesamt sinken. Da die oxidative Degradation verhindert ist, entstehen folglich auch keine flüchtigen Abbauprodukte, die unerwünscht in die Atmosphäre entweichen würden. Auch wird durch die Verhinderung der Entstehung derartiger Abbauprodukte die Absorptionskapazität der Waschlösung nicht beeinträchtigt.

In FIG 2 ist die allgemeine Strukturformel eines Aminosäuresalzes 20 dargestellt, welches gemäß einer Ausführungsform als Absorptionsmittel in der Waschlösung A der Abscheidevorrichtung 1 eingesetzt ist. Die Waschlösung A ist hierbei als eine wässrige Lösung gegeben.

Das Aminosäuresalz 20 weist einen Kohlenstoff-Substituenten R und weitere Stickstoff-Substituenten R1 und R2 auf. Der Kohlenstoff-Substituent R ist eine Verbindung aus der Gruppe von Wasserstoff, Alkyl, Hydroxyalkyl und Aminoalkyl. Die weiteren Stickstoff-Substituenten R1, R2 sind aus der Gruppe von Wasserstoff, Alkyl, Hydroxyalkyl und Halogenalkyl entnommen. Das Aminosäuresalz 20 ist ein Salz eines Metalls M, insbesondere ein Salz eines Alkalimetalls, zum Beispiel Kalium oder Natrium, wobei in der Carboxylgruppe ein Proton durch das Metall M in ionischer Form ersetzt ist.

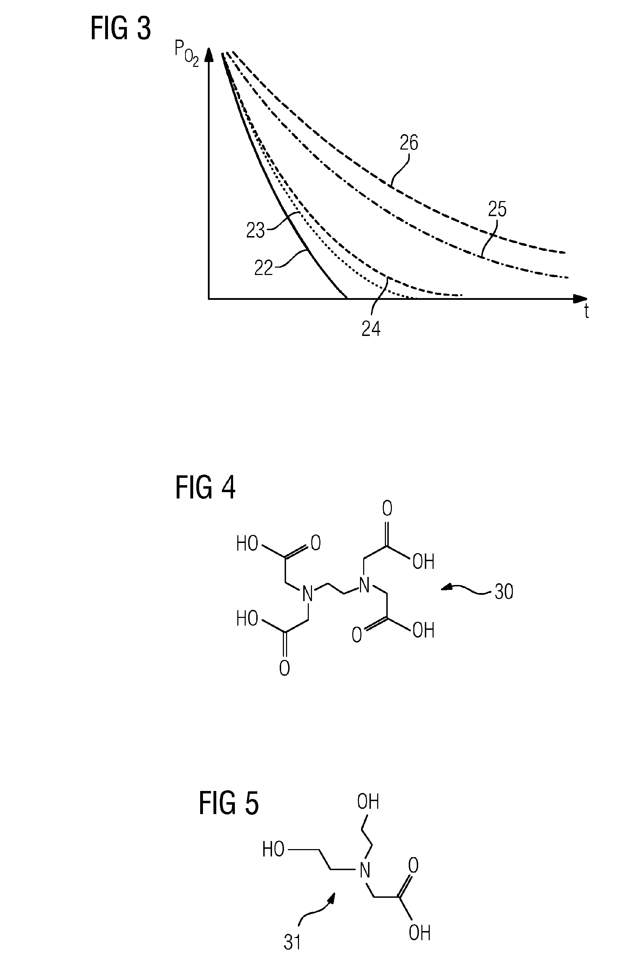

In FIG 3 ist ein Diagramm mit mehreren Messkurven 22 bis 26 dargestellt. Die einzelnen Messkurven 22 bis 26 entsprechen dem Verlauf des Sauerstoffpartialdrucks P_{O2} über die Zeit t. Jeweils in einem abgeschlossenen System wird hierbei die zeitliche Abnahme eines anfänglich eingestellten Sauerstoffpartialdrucks P_{O2} über verschiedene Waschlösungen beobachtet. Diese Abnahme ist ein Maß für den Sauerstoffverbrauch in der Waschlösung, d.h. für eine Sauerstoffdegradation der enthaltenen Absorptionsmittel.

Als Waschlösung wurde in allen Versuchen jeweils eine wässrige Lösung mit einem Aminosäuresalz, vorliegend Sarkosin (N-Methylglycin) mit einer Konzentration von 4 Mol eingesetzt. Zusätzlich wurden Kupfer-Ionen und Nickel-Ionen mit einer Konzentration von 1 mMol zugesetzt.

Die Messkurve 22 zeigt den zeitlichen Verlauf des Sauerstoffpartialdrucks P_{O2} über der derart hergestellten Waschlösung. Die Messkurve 23 zeigt den Verlauf des Sauerstoffpartialdrucks P_{O2} über einer Waschlösung, der zusätzlich Bicin mit einer Konzentration von 1 mMol als Oxidationsinhibitor zugesetzt wurde. Die Messkurve 24 entspricht dem Fall einer Waschlösung, der als Oxidationsinhibitor zusätzlich EDTA in einer Konzentration von 1 mMol zugesetzt wurde. Die Messkurve 25 spiegelt den Versuch wieder, wobei der Waschlösung als Oxidationsinhibitor eine Mischung aus EDTA und Bicin mit einer Konzentration von jeweils 5 mMol zugemengt wurde. Die Messkurve 26 entspricht schließlich dem Verlauf über einer reinen Waschlösung, der keine Metallionen zugesetzt wurden.

Es wird ersichtlich, dass durch Zugabe von Metallionen der Sauerstoffverbrauch der untersuchten Waschlösung stark ansteigt. Die Metallionen katalysieren die oxidative Degradation des eingesetzten Aminosäuresalzes. Die Messkurven 22 und 26 weichen stark voneinander ab.

Durch Zusatz von Bicin (Messkurve 23) oder EDTA (Messkurve 25) wird die oxidative Degradation der Aminosäuresalze bereits sichtbar verringert. Durch Zugabe einer Mischung aus EDTA und Bicin nähert sich der Verlauf des Sauerstoffpartialdrucks nahezu dem Verlauf über einer Waschlösung ohne Metallionen. Die oxidative Degradation der Aminosäuresalze ist insofern durch eine Mischung aus EDTA und Bicin äußerst wirkungsvoll unterdrückt.

In den FIG 4 und 5 ist jeweils die Strukturformel für EDTA 30 sowie für Bicin 31 dargestellt.

## Patentansprüche

1. Waschlösung (A)zur Absorption von Kohlendioxid aus einem Rauchgas (RG) einer Verbrennungsanlage, umfassend wenigstens ein aminhaltiges Absorptionsmittel (z.B. 20) sowie Bicin (30) und/oder EDTA (31) als einen Oxidationsinhibitor.

2. Waschlösung (A) nach Anspruch 1,
wobei als Oxidationsinhibitor eine Mischung aus EDTA (31) und Bicin (30) umfasst ist.

3. Waschlösung (A) nach Anspruch 1 oder 2,
wobei der Anteil an Bicin (30) und EDTA (31) in Summe wenigstens 1 mMol und bis zu 100 mMol beträgt.

4. Waschlösung (A) nach einem der vorhergehenden Ansprüche, welche als wässrige Lösung vorliegt.

5. Waschlösung (A) nach einem der vorhergehenden Ansprüche, wobei eine Mehrzahl von Aminen (z.B. 20) umfasst ist.

6. Waschlösung (A) nach einem der vorhergehenden Ansprüche, wobei als Amin ein Alkanolamin und/oder ein zur Bildung von Carbamat sterisch gehindertes Amin umfasst ist.

7. Waschlösung (A) nach einem der vorhergehenden Ansprüche, wobei als Amin ein Aminosäuresalz (20) umfasst ist.

8. Waschlösung (A) nach Anspruch 7,
wobei das Aminosäuresalz (20) einen Kohlenstoff-Substituenten (R) aus der Gruppe aufweist, die Wasserstoff, ein Alkyl, ein Hydroxyalkyl und ein Aminoalkyl enthält.

9. Waschlösung (A) nach Anspruch 7 oder 8,
wobei das Aminosäuresalz (20) einen Stickstoff-Substituenten (R1, R2) aus der Gruppe aufweist, die Wasserstoff, ein Alkyl, ein Hydroxyalkyl und ein Halogenalkyl enthält.

10. Waschlösung (A) nach einem der Ansprüche 7 bis 9,
wobei das Aminosäuresalz (20) ein Salz eines Metalls (M), insbesondere eines Alkalimetalls, ist.

11. Verfahren zur Abscheidung von Kohlendioxid aus einem Rauchgas (RG) einer Verbrennungsanlage, wobei einer Waschlösung (A) mit einem aminhaltigen Absorptionsmittel (z.B. 20) als Oxidationsinhibitor Bicin (31) und/oder EDTA (30) zugemischt wird, das Rauchgas (RG) mit der derart aufbereiteten Waschlösung (A) unter Absorption von enthaltenem Kohlendioxid in Kontakt gebracht wird, und wobei anschließend die Waschlösung (A) unter Desorption des Kohlendioxids thermisch behandelt wird.

12. Verfahren nach Anspruch 11,
wobei eine Waschlösung (A) entsprechend den Merkmalen der Ansprüche 1 bis 10 aufbereitet wird.
